# EUROPEAN PATENT SPECIFICATION

(11) **EP 1 505 315 B1**
(45) Date of publication and mention of the grant of the patent: **20.12.2006**
(21) Application number: 04007229.0
(22) Date of filing: 25.03.2004
(51) Int. Cl.: F16F 9/44, F16F 9/46

(54) **Hydraulic shock absorber**
Hydraulischer Stossdämpfer
Amortisseur hydraulique

(30) Priority: 06.08.2003 JP 2003288222
(43) Date of publication of application: 09.02.2005
(73) Proprietor: SHOWA CORPORATION, Gyoda-shi, Saitama (JP); HONDA GIKEN KOGYO KABUSHIKI KAISHA, Minato-ku Tokyo (JP)
(72) Inventor: Tomonaga, Takao Showa Corporation, Iwata-gun Shizuoka (JP); Nagai, Osamu Showa Corporation, Iwata-gun Shizuoka (JP); Kokubu, Shinichi, Wako-shi Saitama (JP); Okazaki, Kazumi, Wako-shi Saitama (JP)
(74) Representative: Casalonga, Axel

(56) References cited:
- PATENT ABSTRACTS OF JAPAN vol. 018, no. 006 (M-1537), 7 January 1994 (1994-01-07) -& JP 05 248471 A (KAYABA IND CO LTD), 24 September 1993 (1993-09-24)
- PATENT ABSTRACTS OF JAPAN vol. 016, no. 129 (M-1228), 2 April 1992 (1992-04-02) & JP 03 292429 A (SHOWA MFG CO LTD), 24 December 1991 (1991-12-24)

## Description

The present invention relates to a hydraulic shock absorber for an automobile or a motorcycle.

The Japanese Patent Application Laid-Open No. H3-292429 discloses a hydraulic shock absorber, wherein a piston rod side chamber and a piston side chamber are sectioned in a damper cylinder by a piston provided in a piston rod inserted slidably in the damper cylinder, the piston being provided with a pressure side valve and a pressure side damping force adjusting device. A partition wall member for sectioning the piston side chamber and a reservoir chamber is provided with the pressure side valve and the pressure side damping force adjusting device.

According to a compression process of the hydraulic shock absorber, at a low speed range of the piston speed, the pressure side damping force is generated by the pressure side damping force adjusting device of the piston with respect to the operating oil substituted and flowing from the piston side chamber to the piston rod side chamber, and by the pressure side damping force adjusting device of the partition member with respect to the operating oil corresponding to the entrance volume of the piston rod into the damper cylinder. Moreover, at a medium and high speed range of the piston speed, the pressure side damping force is generated by the pressure side valve of the piston with respect to the operating oil substituted and flowing from the piston side chamber to the piston rod side chamber, and by the pressure side valve of the partition wall member with respect to the operating oil corresponding to the entrance volume of the piston rod. Thereby, the high pressure side damping force can be generated in all the speed range of the piston speed, and furthermore, the pressure side damping force adjusting range can be made larger in the low speed range.

Then, according to this hydraulic shock absorber, in the stroke range most frequently used, in the low speed range of the piston speed, the differential pressure of the piston side chamber and the piston rod side chamber generated by the pressure side damping force adjusting device of the piston, and the differential pressure of the piston side chamber and the reservoir chamber generated by the pressure side damping force adjusting device of the partition member are adjusted so as to be equal. Moreover, in the medium and high speed range of the piston speed, the differential pressure of the piston side chamber and the piston rod side chamber generated by the pressure side valve of the piston, and the differential pressure of the piston side chamber and the reservoir chamber generated by the pressure side valve of the partition member are made to be equal. Thereby, generation of the negative pressure is prevented in the piston rod side chamber in each speed range of the compression process.

According to this hydraulic shock absorber, the pressure of the piston rod side chamber in the damper cylinder is:
(a) determined by the setting of the pressure side damping force adjusting device of the piston (the spring load of the coil spring for forcing the poppet valve in the case of a poppet valve, the valve opening degree in the case of a needle valve, or the like), and the setting of the pressure side damping force adjusting device of the partition member in the low speed range of the piston speed; and
(b) determined by the spring characteristics (the spring constant and the initial load of the pressure side valve) of the pressure side valve of the piston and the pressure side valve of the partition member in the medium and high speed range of the piston speed.

As a result, in order to prevent generation of the negative pressure in the piston rod side chamber, in the low speed range of the piston speed, it is required to adjust the pressure side damping force adjusting device of the piston and/or the partition member is required, and furthermore, in the medium and high speed range, it is required to alter the spring characteristics (change to the valve having different spring characteristics, of the like) of the pressure side valve and/or the partition member of the piston. Therefore, a problem arises in that time is needed for the damping force adjustment for the piston and the partition member, or the valve changing, and furthermore, accompanied by the adjustment of the pressure side damping force adjusting device or the change of the valve, a problem arises in that the pressure side damping force generated by the piston or the partition member changes as well.

The Japanese Patent Publication No. 2,820,276 discloses a hydraulic shock absorber comprising pressure side valves including a first damping valve and a second damping valve provided in a pressure side damping valve of a piston and a base (partition member), wherein a second check valve provided in a check channel of a base is opened so as to supply a fluid from a reservoir chamber provided above the base to a piston rod side chamber in the case the aperture of the pressure side damping valve of the piston is so large that the lower chamber (piston rod side chamber) in the cylinder tube is in the negative pressure in the compression process.

According to this hydraulic shock absorber, the second check valve for supplying a fluid from the reservoir chamber to the piston rod side chamber via the outer side chamber in the case the aperture of the pressure side damping valve of the piston is so large that the lower chamber (piston rod side chamber) in the cylinder tube is at a negative pressure, a valve adjusting device for adjusting the injection valve opening pressure of the second check valve provided in the partition member from the outside is not provided. Therefore, there is no disclosure of any technological items for preventing the generation of the negative pressure in the piston rod side chamber without the need of changing the spring characteristics (valve specification) of the pressure side valves of the first damping valve and the second damping valve provided in the pressure side damping valve and the base (partition member) of the piston (piston), adjusting the pressure side damping force by adjusting the pressure of the piston rod side chamber, or adjusting the stretch side damping force characteristics.

Document JP 05248471 A discloses a shock absorber with means for preventing the generation of the negative pressure in the piston rod side chamber during a high speed compression stroke.

Accordingly, an object of the present invention is to provide a hydraulic shock absorber, capable of avoiding the negative pressure of the piston rod side chamber without changing the setting (adjusting amount) of the pressure side damping force adjusting device, or the setting (valve specification, or the like) of the spring characteristics of the pressure side valve, and capable of adjusting the pressure side damping force or the stretch side damping force characteristics by adjusting the pressure of the piston rod side chamber.

According to the present invention, there is disclosed a hydraulic shock absorber comprising a piston provided in the top end part of a piston rod inserted slidably in a damper cylinder, a piston rod side chamber for storing the piston rod and a piston side chamber not storing the piston rod defined by the piston in the damper cylinder, a reservoir chamber separated from the piston side chamber not storing the piston rod by a partition wall member, and pressure side valves for generating the damping force at the time of compression provided each in the piston and the partition wall member.

A path for communication between the reservoir chamber and the piston rod side chamber is formed, a blow valve is provided in the path, to be opened at the time the differential pressure between the reservoir chamber and the piston rod side chamber reaches a predetermined value, for allowing oil to flow from the reservoir chamber to the piston rod side chamber, and a blow valve adjusting device for operating the valve opening pressure of the blow valve from outside is provided.

The present invention will be more fully understood from the detailed description given below and from the accompanying drawings which should not be taken to be a limitation on the invention, but are for explanation and understanding only.
FIG. 1 is a schematic diagram showing a hydraulic shock absorber according to a first embodiment;
FIG. 2 is a cross sectional view showing a hydraulic shock absorber;
FIG. 3 is a cross sectional view taken along the line III-III of FIG. 2;
FIG. 4 is a cross sectional view taken along the line IV-IV of FIG. 2;
FIG. 5 is a cross sectional view showing a piston valve device;
FIG. 6 is a cross sectional view showing a base valve device;
FIG. 7 is a cross sectional view showing a blow valve device; and
FIG. 8 is a schematic diagram showing a hydraulic shock absorber according to a second embodiment.

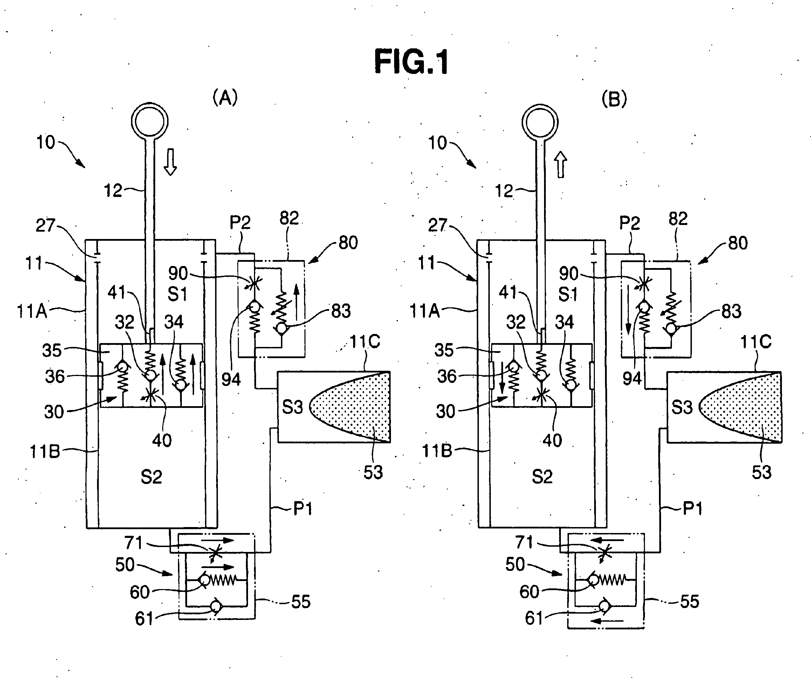

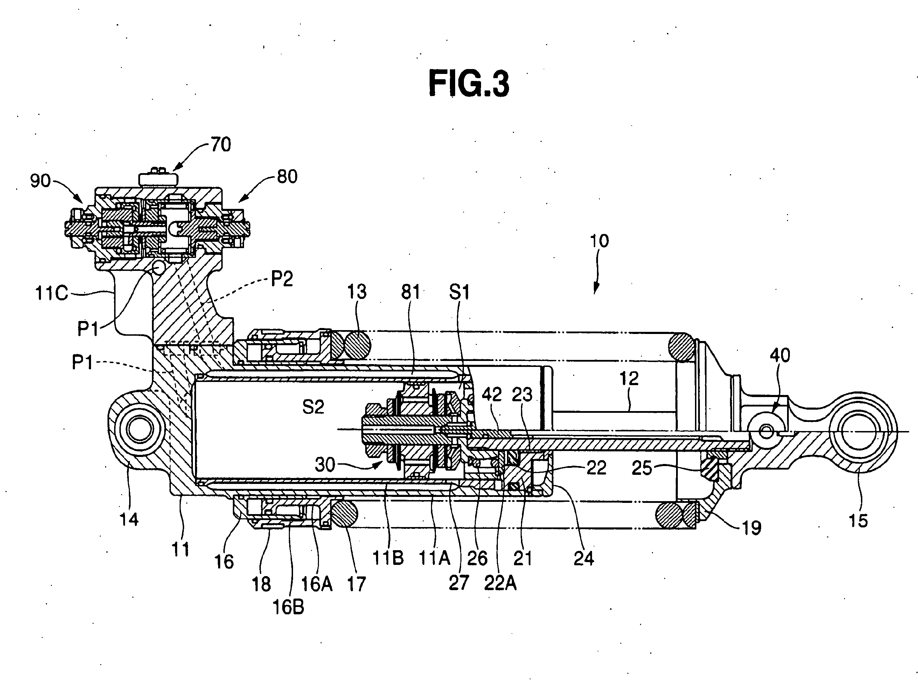

As shown in FIGS. 1 to 4, a hydraulic shock absorber 10 for an automobile or a motorcycle comprises a damper case 11 having an outer cylinder 11A, with a damper cylinder 11B provided upright in the outer cylinder 11A of the damper case 11. Then, the hydraulic shock absorber 10 has a hollow piston rod 12 inserted in the damper cylinder 11B of the damper case 11, and a suspension spring 13 provided on the outer circumference side of the outer cylinder 11A of the damper case 11 and the piston rod 12.

The outer cylinder 11A of the damper case 11 comprises an automobile or motorcycle body side mounting member 14, and the piston rod 12 comprises a wheel side mounting member 15. A pneumatic jack 16 is fixed on the outer circumference part of the damper cylinder 11B so that a spring receipt 17 provided in a plunger 16A of the pneumatic jack 16 can be supported by a spring receipt supporting ring 18 attached on the housing 16B of the pneumatic jack 16. A spring receipt 19 is provided in the wheel side mounting member 15 mounted on the piston rod 12. By providing the suspension spring 13 between the spring receipt 17 and the spring receipt 19, and displacing the mounting position of the spring receipt 17 by the pneumatic jack 16 and the spring receipt supporting ring 18, the setting height of the suspension spring 13 can be adjusted. The spring force of the spring 13 absorbs the impact force applied on the automobile from the road surface.

The outer cylinder 11A and the damper cylinder 11B of the damper case 11 comprise a rod guide 21 through which the piston rod 12 is inserted and fitted fluidically tightly. The rod guide 21 accommodates the piston rod 12 fluidically tightly and slidably in the inner diameter part comprising an oil seal 22, an oil seal press 22A, and a bush 23. The damper case 11 comprises a bumper stopper 24 on the outer side end of the outer cylinder 11A so that the most compression stroke can be limited by crashing a pressure side bump rubber 25 provided in the spring receipt 19 around the piston rod 12 with the bumper stopper 24 at the time of being mostly compressed. Moreover, the piston rod 12 comprises a stretch side bump spring 26 in the piston holder 12A inserted in the damper cylinder 11B so that the most stretched stroke can be limited by crashing the bump spring 26 with the oil seal press 22A of the rod guide 21 at the time of being mostly stretched.

As shown in FIG. 1, the hydraulic shock absorber 10 comprises a piston valve device 30, a base valve device 50, and a blow valve device 80. The hydraulic shock absorber 10 controls the stretch and contraction oscillation of the damper case 11 and the piston rod 12 accompanied by the absorption of the impact force by the suspension spring 13 by the damping force generated by the valve devices 30, 50, 80.

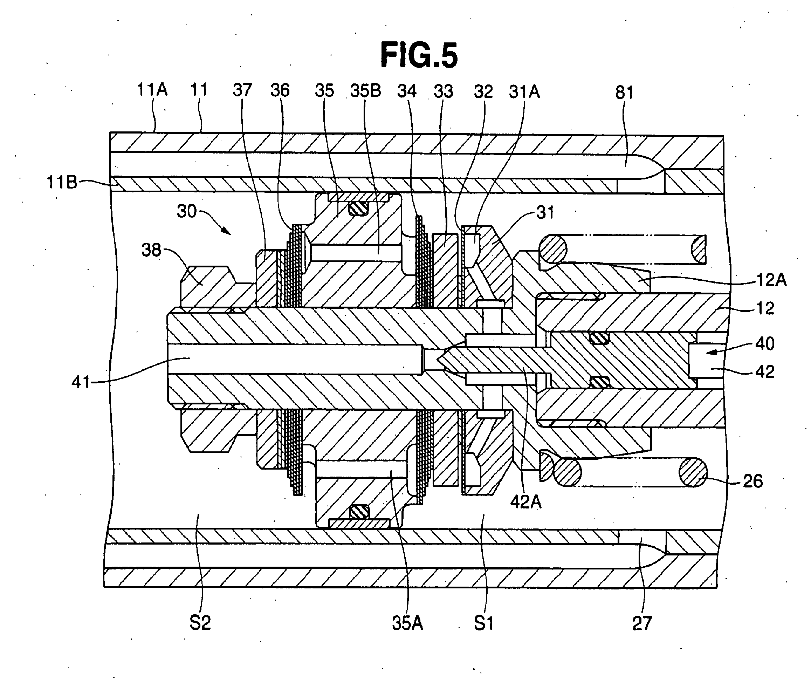

As shown in FIGS. 1, 3, 5, the piston valve device 30 comprises a sub piston 31, a pressure side sub valve 32, a valve stopper 33, a pressure side valve 34, a main piston 35, a stretch side valve 36, and a valve stopper 37 mounted successively on a piston holder 12A provided in the top end part of a piston rod 12 inserted through a damper cylinder 11B of a damper case 11, with these elements fastened by a nut 38.

The main piston 35 slides inside the damper cylinder 11B so as to divide the inside of the damper cylinder 11B into a piston rod side chamber S1 storing the piston rod 12, and a piston side chamber S2 not storing the piston rod 12. The main piston 35 comprises a pressure side channel 35A comprising the pressure side valve 34 having a large number of plate like valve pieces laminated, for allowing communication between the piston rod side chamber S1 and the piston side chamber S2, and a stretch side channel 35B comprising the stretch side valve 36 having a large number of plate like valve pieces laminated, for allowing communication between the piston rod side chamber S1 and the piston side chamber S2.

The piston valve device 30 comprises a first pressure side damping force adjusting device 40.

As shown in FIGS. 1 to 3 and 5, the first pressure side damping force adjusting device 40 is provided with a bypass path 41 with one end opened in the piston side chamber S2, and the other end opened in the piston rod side chamber S1 via the channel 31A of the sub piston 31, and the pressure side sub valve 32 in the piston rod 12. The bypass path 41 is provided parallel with the pressure side valve 34 (pressure side channel 35A) and the stretch side valve 36 (stretch side channel 35B).

The first pressure side damping force adjusting device 40 is provided with a damping force adjusting rod 42 for adjusting the channel area of the bypass path 41 in the piston rod 12. The damping force adjusting rod 42 is moved reciprocally in the piston rod 12 by an adjuster device 43 provided in the wheel side mounting member 15 such that the channel area of the bypass path 41 is adjusted by the needle valve 42A on the top end. When the pressure side sub valve 32 is backed up by the valve stopper 33 via a shim so as to cover the channel 31A of the sub piston 31 (the opening part to the piston rod side chamber S1 of the bypass path 41 on the downstream side of the needle valve 42A of the first pressure side damping force adjusting device 40) , the valve is opened at the time the pressure of the piston side chamber S2 with the bypass path 41 opened reaches or exceeds a certain value.

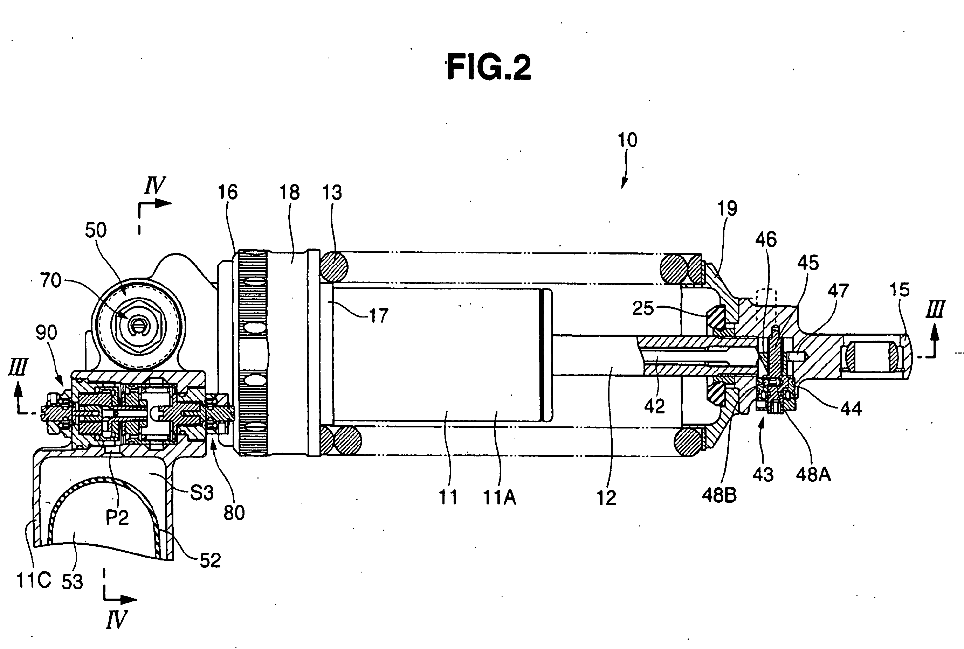

The adjuster device (FIG. 2) operates the adjuster rod 45 inserted in the adjuster holder 44 pressed and fixed in the wheel side mounting member 15 for the outside rotation, laterally moves the slide cam 46 attached on the adjuster rod 45 under the guidance of the guide bolt 47, and reciprocally moves the damping force adjusting rod 42 bearing against the cam surface of the cam 46 in the vertical direction of the piston rod 12. The adjuster rod 45 engages a ball 48B forced by a set spring 48A successively with engaging recess parts provided at a plurality of positions in the circumferential direction in the inner circumference of the adjuster holder 44 so as to be set at any rotation operation position.

Therefore, in the low speed range in the compression process of the hydraulic shock absorber 10 the oil in the piston side chamber S2 flows from the bypass path 41 comprising the first pressure side damping force adjusting device 40 to the piston rod side chamber S1 so as to generate the pressure side damping force (to be adjusted by the adjuster device 43) generated by the aperture resistance of the needle valve 42A of the damping force adjusting rod 42, and the pressure side damping force derived from the flow resistance in the gap formed by the deflected deformed part of the pressure side sub valve 32 with respect to the sub piston 31. Moreover, in the medium and high speed range, the oil in the piston side chamber S2 deflects and deforms the pressure side valve 34 so as to push and open the same for allowing oil to flow into the piston rod side chamber S1 so that the pressure side damping force is generated, derived from the flow resistance in the gap formed by the deflected and deformed part of the pressure side valve 34 with respect to the main piston 35.

In the stretch process of the hydraulic shock absorber 10, the oil in the piston rod side chamber S1 deflects and deforms the stretch side valve 36 so as to push and open the same for allowing oil to flow into the piston side chamber S2 so that the stretch side damping force is derived from the flow resistance in the gap formed by the deflected and deformed part of the stretch side valve 36 with respect to the main piston 35.

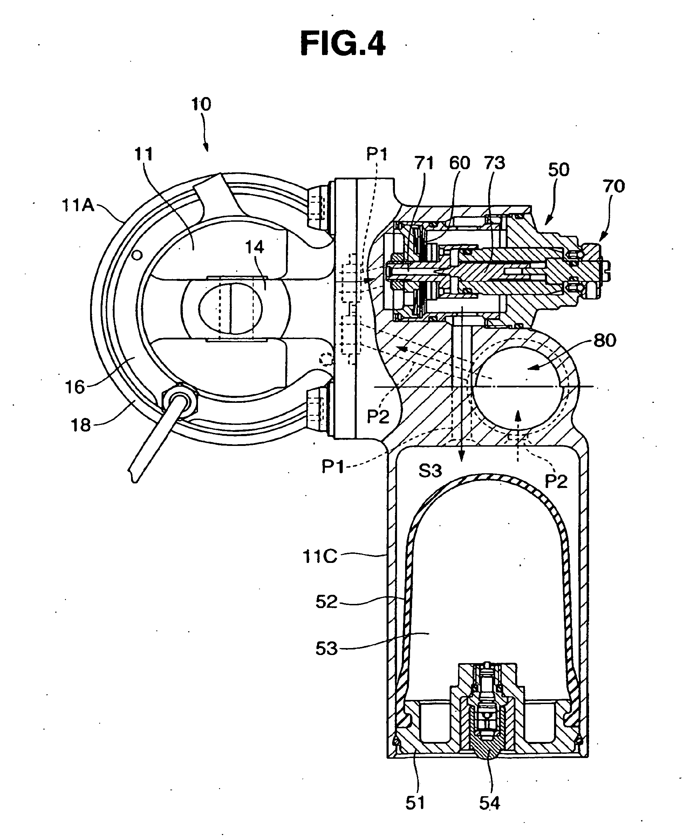

The shock absorber 10 comprises a sub tank 11C provided integrally with the outer cylinder 11A of the damper case 11, with a reservoir chamber S3 provided inside the sub tank 11C. As shown in FIG. 4, the sub tank 11C has an inside sealed by the cap 51 and divided by a diaphragm 52 (it may also be a free piston) into the reservoir chamber S3 and a pressuring gas chamber 53. The cap 51 is provided with a gas sealing valve 54.

The hydraulic shock absorber 10 comprises a first path P1 for communication between the piston side chamber S2 and the reservoir chamber S3 respectively in the outer cylinder 11A and the sub tank 11C of the damper case 11via the base valve device 50.

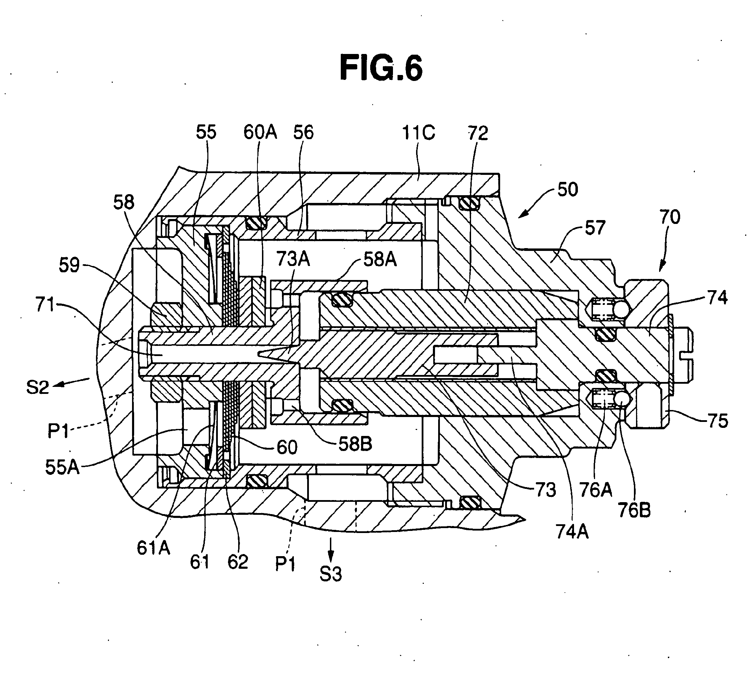

As shown in FIG. 6, the base valve device 50 comprises a partition wall member 55 and a valve housing 56 fluidically tightly mounted in the first path P1 formed in the sub tank 11C. The partition wall member 55 and the valve housing 56 are fixed by a plug bolt 57 to be attached on the sub tank 11C. The partition wall member 55 separates the piston side chamber S2 from the reservoir chamber S3. A channel 55A is formed in the partition wall member 55. A bypass forming bolt 58 is fixed by a nut 59 in the central part of the partition wall member 55, with a pressure side valve 60 for opening the channel 55A at the time of compression, and a stretch side valve (check valve) 61 for communication through channel 55A at the time of stretch provided around the central part of the bypass forming bolt 58. The pressure side valve 60 comprises a large number of plate like valve pieces laminated, is clamped and supported between the partition wall member 55 and the bypass forming bolt 58 via a valve stopper 60A. The stretch side valve 61 is biased by a valve spring 61A supported by its rear surface by the partition wall member 55 so as to be seated on a valve receipt 62 clamped by the partition wall member 55 and the valve housing 56. The pressure side valve 60 is seated on the flat surface of the stretch side valve 61 seated on the valve receipt 62.

The base valve device 50 comprises a second pressure side damping force adjusting device 70.

The second pressure side damping force adjusting device 70 has a bypass path 71 for communication between the piston side chamber S2 and the reservoir chamber S3 provided in the bypass forming bolt 58. The bypass path 71 is provided parallel with the pressure side valve 60 and the stretch side valve 61 (channel 55A). The second pressure side damping force adjusting device 70 has a rod supporting member 72 pressed in and fixed to the center of the plug bolt 57 fitted fluidically tightly to the top end cup part 58A of the bypass forming bolt 58, and comprises a damping force adjusting rod 73 to be attached onto a rod supporting member 72 for adjusting the channel area of the bypass path 71. The damping force adjusting rod 73 is moved reciprocally in the rod supporting member 72 according to the outside rotation operation of an adjuster rod 74 provided through the plug bolt 57 so that the channel area of the bypass path 71 can be adjusted by the top end needle valve 73A. The bypass path 71 allows communication with the first path P1 on the reservoir chamber S3 side via the channel 58B provided in the top end cup part 58A of the bypass forming bolt 58.

The adjuster rod 74 is rotatable within the plug bolt 57 by the knob 75 fixed on the outer side end of said plug bolt 57 so that a top end projection piece 74A of the adjuster rod 74 fixed in rotation on the base end recess part of the damping force adjusting rod 73 rotates said rod 73 in the same direction and moves the top end needle valve 73A longitudinally. Balls 76B forced by set springs 76A are mounted in the plug bolt 57 on its outer side end face for engaging successively with engaging recess parts provided at a plurality of positions in the circumference direction of the knob 75 inner side end face so that the adjuster rod 74 can be set at any rotation operation position.

Therefore, in the low speed range of the compression process of the hydraulic shock absorber 10, the oil corresponding to the entrance volume of the piston rod 12 into the damper cylinder 11B flows from the piston side chamber S2 to the reservoir chamber S3 via the bypass path 71 comprising the second pressure side damping force adjusting device 70 so as to generate the pressure side damping force (to be adjusted by the adjuster rod 74) generated by the aperture resistance of the needle valve 73A of the damping force adjusting rod 73. Moreover, in the medium and high speed range, the oil of the piston side chamber S2 deflects and deforms the pressure side valve 60 so as to push and open the same for flowing into the reservoir chamber S3, and the deflected and deformed part of the pressure side valve 60 is separated from the flat surface of the stretch side valve 61 so as to generate the pressure side damping force derived from the flow resistance of the generated gap.

In the stretch process of the hydraulic shock absorber 10, the oil corresponding to the withdrawal volume of the piston rod 12 from the damper cylinder 11B flows from the reservoir chamber S3 to the piston side chamber S2 via the bypass path 71, and the oil of the reservoir chamber S3 opens the stretch side valve 61 so as to be supplied to the piston side chamber S2.

The hydraulic shock absorber 10 comprises an outer side chamber 81 communicating with the piston rod side chamber S1 via the oil hole 27 formed in the damper cylinder 11B, said chamber 81 being defined between the outer cylinder 11A and the damper cylinder 11B of the damper case 11. The hydraulic shock absorber 10 is provided with a second path P2 for communication between the reservoir chamber S3 and the outer side chamber 81 in the outer cylinder 11A of the damper case 11. The blow valve device 80 is provided in the second path P2 formed in the sub tank 11C.

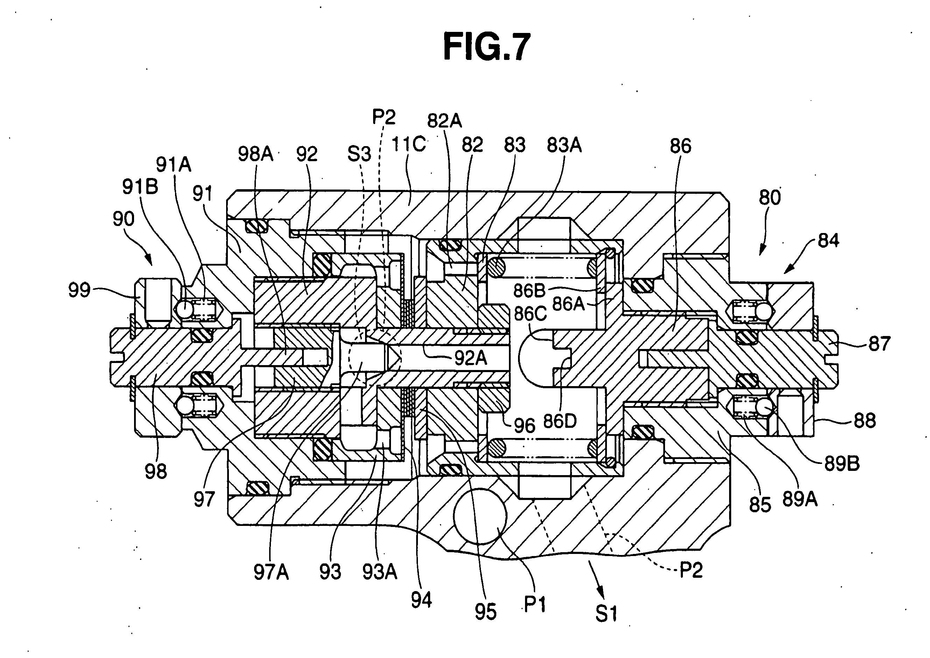

As shown in FIG. 7, the blow valve device 80 has a valve sheet 82 fluidically tightly mounted in the middle part of the second path P2 formed in the sub tank 11C, and the valve sheet 82 is fixed by a plug bolt 91, or the like of the stretch side damping force adjusting device 90 to be described later. The valve sheet 82 separates the piston rod side chamber S1 and the reservoir chamber S3 communicating with each other via the outer side chamber 81. A channel 82A is formed in the valve sheet 82, and a plate like blow valve 83 for opening or closing the channel 82A is biased and seated by the valve spring 83A. The blow valve 83 is opened at the time the differential pressure between the piston rod side chamber S1 and the reservoir chamber S3 reaches a predetermined value so as to allow the oil to flow from the reservoir chamber S3 to the piston rod side chamber S1.

In FIG. 4, the solid line arrow represents the oil flow in the compression process, and the broken line arrow represents the oil flow at the time the blow valve 83 is opened.

The blow valve device 80 comprises a blow valve adjusting device 84.

The blow valve adjusting device 84 has a spring force adjusting rod 86 attached on the plug bolt 85 screwed on one end side of the sub tank 11C, and supports the rear surface of the valve spring 83A by the washer 86B supported by the flange 86A of the spring force adjusting rod 86. The spring force adjusting rod 86 is moved reciprocally according to the rotation operation from outside of an adjuster rod 87 provided through the plug bolt 85, so as to adjust the spring force of the valve spring 83A, and thus to adjust the valve opening pressure of the blow valve 83.

The adjuster rod 87 is secured to a knob 88 fixed on the outer side end, and engaging balls 89B forced by set springs 89A stored in the outer side end face of the plug bolt 85 successively with engaging recess parts provided in a plurality of positions on the circumference of the inner side end face of the knob 88 so as to set the adjuster rod 87 at any rotation operation position. The top end stopper surface 86C of the spring force adjusting rod 86 is crashed against the end face of the bypass forming bolt 92 of the stretch side damping force adjusting device 90 to be described later at the time of the maximum compression of the valve spring 83A by the adjuster rod 87, and it comprises a slot 86D for preventing closure of the bypass path 92A.

The blow' valve device 80 comprises a stretch side damping force adjusting device 90.

The stretch side damping force adjusting device 90 has a plug bolt 91 attached on the other end side (side opposite to the plug bolt 85) of the sub tank 11C. The bypass forming bolt 92 attached on the center part of the plug bolt 91, is mounted inside a sub valve sheet 93. A stretch side sub valve 94, a valve stopper 95, and the above-mentioned valve sheet 82 in the bypass forming bolt 92, are secured by a nut 96. The bypass forming bolt 92 is provided with a bypass path 92A opened on the piston rod side chamber S1 side, and the sub valve sheet 93 is provided with a channel 93A to be connected in series with the bypass path 92A and opened on the reservoir chamber S3 side. The bypass path 92A and the channel 93A are provided parallel with the blow valve 83 (channel 82A of the valve sheet 82).

The stretch side damping force adjusting device 90 has a damping force adjusting rod 97 for adjusting the channel area of the bypass path 92A in the bypass forming bolt 92. The damping force adjusting rod 97 is moved reciprocally in the bypass forming bolt 92 according to the outer side rotation operation of an adjuster rod 98 provided through the plug bolt 91. The channel area of the bypass path 92A is adjusted by the top end needle valve 97A. Here, the stretch side sub valve 94 is backed up by the valve stopper 95 via a plurality of shims, covers the channel 93A from the reservoir chamber S3 side, and opens at the time the pressure of the piston rod side chamber S1 reaches or exceeds a certain value.

The adjuster rod 98 is rotated within the plug bolt 91 by a knob 99 fixed on the outer side end of said plug bolt 91 so that a top end projection piece 98A of the adjuster rod 98 is fixed in rotation on the base end recess part of the damping force adjusting rod 97 and rotates said rod 97 in the same direction, thus moving the top end needle valve 97A longitudinally. By engaging balls 91B forced by set springs 91A mounted in the outer side end face of the plug bolt 91 successively with engaging recess parts provided in a plurality of positions in the circumference direction of the inner side end face of the knob 99 it is possible to set the adjuster rod 98 at any rotation operation position.

Therefore, in the compression process of the hydraulic shock absorber 10, at the time the differential pressure between the reservoir chamber S3 and the piston rod side chamber S1 reaches a predetermined value, the blow valve 83 is opened so as to avoid a negative pressure in the piston rod side chamber S1. The valve opening pressure of the blow valve 83 can be adjusted by the blow valve adjusting device 84.

In the stretch process of the hydraulic shock absorber 10, the oil of the piston side chamber S1 passes through the bypass path 92A comprising the stretch side damping force adjusting device 90, deflects and deforms the stretch side sub valve 94 so as to push and opens the same, and flows into the reservoir chamber S3. The stretch side damping force (to be adjusted by the adjuster rod 98) is generated by the aperture resistance of the needle valve 97A of the damping force adjusting rod 97, and the stretch side damping force is derived from the flow resistance of the gap formed between the deflected and deformed part of the stretch side sub valve 94 and the sub valve sheet 93. The stretch side damping force adjusting device 90 can be omitted.

The hydraulic shock absorber 10 executes the damping operation as follows.

In the low speed range of the compression process of the hydraulic shock absorber 10,
(a) the pressure side damping force is generated by the oil passing through the bypass path 41 having the opening degree adjustment defined by the damping force adjusting rod 42 of the first pressure side damping force adjusting device 40, and the pressure side sub valve 32 provided in the sub piston channel 31A in the piston valve device 30, and
(b) the pressure side damping force is generated by the oil corresponding to the entrance volume of the piston rod passing through the bypass path 71 having the opening degree adjustment defined by the damping force adjusting rod 73 of the second pressure side damping force adjusting device 70 in the base valve device 50.
   In the medium and high speed range,
(c) the pressure side damping force is generated by the oil passing through the pressure side valve 34 provided in the pressure side channel 35A of the main piston 35 in the piston valve device 30, and
(d) the pressure side damping force is generated by the oil corresponding to the entrance volume of the piston rod passing through the pressure side valve 60 provided in the channel 55A of the partition member 55 in the base valve device 50.

Moreover, in the compression process (FIG. 1(A), 4 to 7) of the hydraulic shock absorber 10, in all ranges from the low speed range to the medium and high speed range, the blow vale 83 is opened at the time the differential pressure between the piston rod side chamber S1 and the reservoir chamber S3 reaches a predetermined value, and the oil of the reservoir chamber S3 flows to the piston rod side chamber S1 so as to avoid a negative pressure in the piston rod side chamber S1.

In the low speed range in the stretch process of the hydraulic shock absorber 10,
(a) the stretch side damping force is generated by the oil passing through the bypass path 92A having the opening degree adjustment defined by the damping force adjusting rod 97 of the stretch side damping force adjusting device 90 and the stretch side sub valve 94 provided in the channel 93A of the sub valve sheet 93 in the blow valve device 80.
   In the medium and high speed range,
(b) the stretch side damping force is generated by the oil passing through the stretch side valve 36 provided in the stretch side channel 35B of the main piston 35 in the piston valve device 30.

In the stretch process of the hydraulic shock absorber 10 (FIGS. 1(B), 5, 7), although the oil of the reservoir chamber S3 flows to the piston side chamber S2 through the stretch side valve (check valve) 61 of the base valve device 50, the damping force is not generated in the stretch side valve 61.

According to the above-mentioned pressure side and stretch side damping forces, the stretching and contraction oscillation of the hydraulic shock absorber 10 can be controlled.

According to this embodiment, the following effects can be achieved.
(1) According to the setting of the pressure side valves 34, 60 provided each in the piston 35 and the partition member 55 set for obtaining the desired pressure side damping force characteristics, in the case the piston rod side chamber S1 has a negative pressure, for example, if the damping force generated by the pressure side valve 34 of the piston 35 is higher than the damping force generated by the pressure side vale 60 of the partition wall member 55. In this case, at the time the differential pressure between the reservoir chamber S3 and the piston rod side chamber S1 reaches a predetermined value, the blow valve 83 provided in the path P2, 81 for communication between the reservoir chamber S3 and the piston rod side chamber S1 is opened so as to avoid a negative pressure in the piston rod side chamber S1. Then, since the valve opening pressure of the blow valve 83 can be adjusted from the outside, the negative pressure of the piston rod side chamber S1 can be avoided without changing the pressure side valves 34, 60 provided each in the piston 35 and the partition wall member 55. As a result, the troublesome replacement work accompanied by the change of the pressure side valves 34, 60 can be omitted or alleviated so as to quickly cope with the demand of the rider.
   Moreover, at the time the blow valve 83 is opened so that the reservoir chamber S3 and the piston rod side chamber S1 communicate with each other, the pressure of the piston rod side chamber S1 is increased. As a result, the rear pressure for forcing the pressure side valve 34 of the main piston 35 is increased so that the pressure side damping force generated by the pressure side valve 34 can be increased.
(2) By adjusting the valve opening pressure of the blow vale 83, the pressure' of the piston rod side chamber S1 at the time of compression can be adjusted. As a result, the pressure side damping force generated by the pressure side valve 34 of the main piston 35 can be adjusted, and the damping force characteristics at the time of stretch can be adjusted.
(3) By providing the first pressure side damping force adjusting device 40 to the piston 35, and the second pressure side damping force adjusting device 70 to the partition wall member 55, the adjusting width of the pressure side damping force can be made larger in the low speed range of the piston speed.
(4) Since the valve opening pressure of the blow valve 83 can be adjusted from the outside, the negative pressure of the piston rod side chamber S1 can be avoided without changing the adjusting amounts of the first pressure side damping force adjusting device 40 and the second pressure side damping force adjusting device 70. As a result, the troublesome adjusting work for the first and second pressure side damping force adjusting devices 40, 70, or the replacement work accompanied by the specification change of the pressure side sub valve can be omitted or alleviated so as to quickly cope with the demand of the rider.
(5) Since the pressure of the piston rod side chamber S1 in the low speed range at the time of compression can be adjusted by adjusting the valve opening pressure of the blow valve 83, the damping force characteristics in the low speed range at the time of stretch can be adjusted as well.
(6) Since the pressure side sub valve 32 is provided on the downstream side of the first pressure side damping force adjusting device 40, the oil flow from the piston rod side chamber S1 to the piston side chamber S2 through the first pressure side damping force adjusting device 40 is inhibited by the pressure side sub valve 32 so that the first pressure side damping force adjusting device 40 can be provided as a damping force adjusting device dedicated to the pressure side.
(7) Moreover, in the case the reservoir chamber S3 and the piston rod side chamber S1 communicate with each other, the pressure of the piston rod side chamber S1 is increased. As a result, the rear pressure for forcing the pressure side sub valve 32 of the main piston 35 is increased so that the pressure side damping force in the low speed range generated in the pressure side sub valve 32 can be increased.
   Moreover, by adjusting the valve opening pressure of the blow valve 83, the pressure of the piston rod side chamber S1 at the time of compression can be adjusted. As a result, the pressure side damping force in the low speed range generated in the pressure side sub valve 32 of the main piston 35 can be adjusted.
(8) By providing only the pressure side damping force adjusting device 40 to the piston 35, the valve installation structure of the piston 35 can be simplified. Moreover, since the bypass path 92A is provided to the valve sheet 82 provided in the path for communication between the reservoir chamber S3 and the piston rod side chamber S1 and the stretch side damping force adjusting device 90 is provided to the bypass path 92A, the stretch side damping force in the low speed range can be adjusted independently.
(9) In the hydraulic shock absorber 10 comprising the damper case 11 with the sub tank 11C provided to the outer cylinder 11A, the above-mentioned items (1) to (8) can be realized in a simple pipe path configuration (layout).

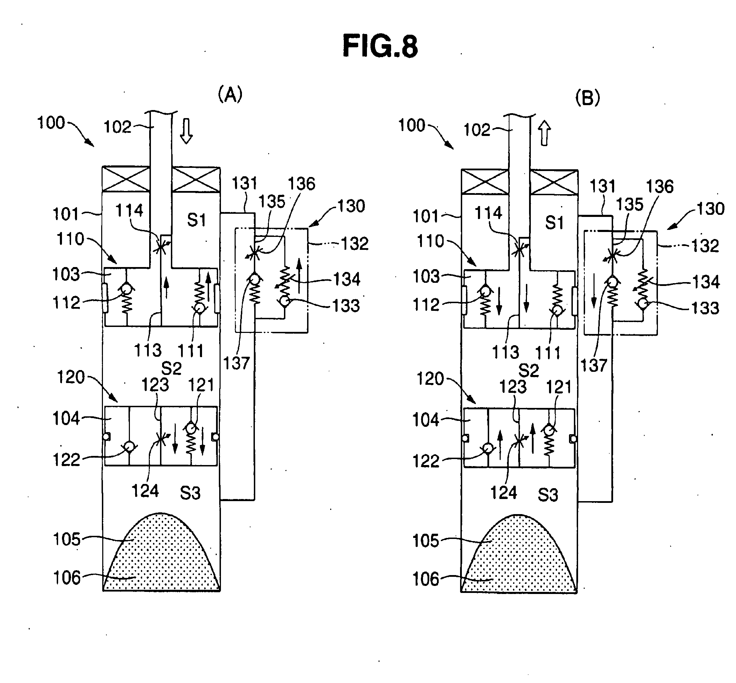

As shown in FIG. 8, the hydraulic shock absorber 100 according to a second embodiment comprises a piston 103 on the top end part of a piston rod 102 inserted fluidically tightly and slidably in a single cylinder type damper cylinder 101, and defining a piston rod side chamber S1 and a piston side chamber S2. A partition wall member 104 is fluidically tightly mounted on the side opposite to the side with the piston rod 102 inside the damper cylinder 101. A reservoir chamber S3 is separated by a partition wall member 104 from the piston side chamber S2. A pressuring gas chamber 106 separated from the reservoir chamber S3 by a diaphragm 105 is provided inside the damper cylinder 101.

Like the hydraulic shock absorber 10 according to the first embodiment, the hydraulic shock absorber 100 comprises a piston valve device 110, a base valve device 120, and a blow valve device 130.

The piston valve device 110 comprises, in the piston 103, a pressure side valve 111 for generating the damping force at the time of compression, and a stretch side valve 112 for generating the damping force at the time of stretch. The piston valve device 110 is provided with a bypass path 113 provided parallel with the pressure side valve 111 disposed in the piston 103, and comprises a first pressuring side damping force adjusting device 114 for adjusting the aperture area of the bypass path 113.

The base valve device 120 comprises, in the partition wall member 104, a pressure side valve 121 for generating the damping force at the time of compression, and a stretch side check valve 122 for allowing the flow at the time of stretch. The base valve device 120 is provided with a bypass path 123 provided parallel with the pressure side valve 121 disposed in the partition wall member 104, and comprises a second pressure side damping force adjusting device 124 for adjusting the aperture area of the bypass path 123.

The blow valve device 130 is provided with a valve sheet 132 in a path 131 for communication between the reservoir chamber S3 and the piston rod side chamber S1, and comprises a blow valve 133 in the valve sheet 132. The blow valve 133 is opened at the time the differential pressure between the reservoir chamber S3 and the piston rod side chamber S1 reaches a predetermined value so as to allow the flow from the reservoir chamber S3 to the piston rod side chamber S1. The blow valve 133 comprises a blow valve adjusting device 134 additionally so that the blow valve adjusting device 134 allows adjustment of the valve opening pressure of the blow valve 133 from outside. The blow valve device 130 is provided with a bypass path 135 provided parallel with the blow valve 133 in the valve sheet 132, and comprises a stretch side damping force adjusting device 136 for adjusting the aperture area of the bypass path 135. The stretch side damping force adjusting device 136 comprises a stretch side valve 137 to be opened at the time the pressure of the piston rod side chamber S1 reaches or exceeds a certain value in series with the stretch side damping force adjusting device 136.

According to this embodiment, the following effects can be achieved.
(1) In the case the piston rod side chamber S1 has a negative pressure according to the settings of the pressure side valves 111, 121 provided each in the piston 103 and the partition wall member 104 set for obtaining a desired pressure side damping force characteristic, for example, in the case the damping force generated by the pressure side valve 111 of the piston 103 is higher than the damping force generated by the pressure side valve 121 of the partition wall member 104, in this case, at the time the differential pressure between the reservoir chamber S3 and the piston rod side chamber S1 reaches a predetermined value, the blow valve 133 provided in the path 131 for communication between the reservoir chamber S3 and the piston rod side chamber S1 is opened so as to avoid a negative pressure in the piston rod side chamber S1. Then, since the valve opening pressure of the blow valve 133 can be adjusted from outside, the negative pressure of the piston rod side chamber S1 can be avoided without changing the settings of the pressure side valves 111, 121 provided each in the piston 103 and the partition wall member 104. As a result, the troublesome and time taking replacement work accompanied by the change of the pressure side valves 111, 121 can be omitted or alleviated so as to quickly cope with the demand of the rider.
(2) By adjusting the valve opening pressure of the blow valve 133, the pressure of the piston rod side chamber S1 at the time of compression can be adjusted as well, and the damping force at the time of compression can be adjusted, and the damping force characteristics at the time of stretch can be adjusted as well.
(3) By providing the first pressure side damping force adjusting device 114 to the piston 103 and providing the second pressure side damping force adjusting device 124 to the partition wall member 104, the adjusting range of the pressure side damping force can be made larger in the low speed range of the piston speed.
(4) Since the valve opening pressure of the blow valve 133 can be adjusted from outside, the negative pressure of the piston rod side chamber S1 can be avoided without changing the adjusting amounts of the first pressure side damping force adjusting device 114 and the second pressure side damping force adjusting device 124. As a result, the troublesome adjusting work of the first and second pressure side damping force adjusting devices 114, 124 can be omitted or alleviated so as to quickly cope with the demand of the rider.
(5) Since the pressure of the piston rod side chamber S1 in the low speed range at the time of compression can be adjusted as well by adjusting the valve opening pressure of the blow valve 133, the damping force characteristics in the low speed range at the time of stretch can be adjusted as well.
(6) By providing only the pressure side damping force adjusting device 114 to the piston 103, the valve installation structure of the piston 103 can be simplified. Moreover, since the bypass path 135 is provided to the valve sheet 132 provided in the path for communication between the reservoir chamber S3 and the piston rod side chamber S1, and the stretch side damping force adjusting device 136 to the bypass path 135, the stretch side damping force in the low speed range can be adjusted independently.

As heretofore explained, embodiments of the present invention have been described in detail with reference to the drawings. However, the specific configurations of the present invention are not limited to the embodiments but those having a modification of the design within the range of the present invention are also included in the present invention.

## Claims

1. A hydraulic shock absorber comprising:
a piston provided in the top end part of a piston rod inserted slidably in a damper cylinder,
a piston rod side chamber (S1) for storing the piston rod and a piston side chamber (S2) not storing the piston rod defined by the piston in the damper cylinder,
a reservoir chamber (S3) separated from the piston side chamber (S2) not storing the piston rod by a partition wall member, and
pressure side valves for generating the damping force at the time of compression provided each in the piston and the partition wall member,
**characterised in that** a path for communication (P2, 131) between the reservoir chamber and the piston rod side chamber is formed, a blow valve (80, 130) is provided in the path, to be opened at the time the differential pressure between the reservoir chamber (S3) and the piston rod side chamber (S1) reaches a predetermined value, for allowing oil to flow from the reservoir chamber (S3) to the piston rod side chamber (S1), and a blow valve adjusting device (84, 134) for operating the valve opening pressure of the blow valve (80, 130) from outside is provided.

2. The hydraulic shock absorber according to claim 1, **characterised in that** a first bypass path (41, 113) parallel with the pressure side valve (34,111) is provided in the piston, a first pressure side damping force adjusting device (40, 114) for adjusting the aperture area of the first bypass path is provided, a second bypass path (71, 123) parallel with the pressure side valve (60,121) provided in the partition wall member is provided, and a second pressure side damping force adjusting device for adjusting the aperture area of the second bypass path is provided.

3. The hydraulic shock absorber according to claim 2, **characterised in that** a pressure side sub valve (32) is provided to the opening part to the piston rod side chamber of the first bypass path on the downstream side of the first pressure side damping force Adjusting device.

4. The hydraulic shock absorber according to any of claims 1 to 3, **characterised in that** a valve sheet is provided in the path for communication between the reservoir chamber and the piston rod side chamber, with the blow valve provided in the valve sheet and a bypass path (92A,135) parallel with the blow valve, and a stretch side damping force adjusting device for adjusting the aperture area of the bypass path is provided.

5. The hydraulic shock absorber according to claim 4, **characterised in that** it comprises a damper case comprising an outer cylinder and a sub tank provided integrally with the outer cylinder, the damper cylinder provided upright in the outer cylinder of the damper case,
an outside chamber communicating with the piston rod side chamber is defined between the outer cylinder and the damper cylinder, the reservoir chamber is provided in the sub tank,
a first path for communication between the piston side chamber and the reservoir chamber is provided in the outer cylinder and the sub tank, a second path for communication between the reservoir chamber and the outside chamber is provided,
the second pressure side damping force adjusting device is provided in the first path formed in the sub tank, and
the blow valve adjusting device for operating the valve opening pressure of the blow valve from the outside and the stretch side damping force adjusting device are provided in the second path formed in the sub tank.

6. The hydraulic shock absorber according to claim 2, **characterised in that** both the first pressure side damping force adjusting device and the second pressure side damping force adjusting device can adjust the aperture area of the respective bypass path from outside.

## Patentansprüche

1. Ein hydraulischer Stoßdämpfer, der Folgendes umfasst:
einen Kolben, der in dem oberen Teilende einer Kolbenstange verschiebbar in einem Dämpferzylinder eingesetzt bereitgestellt ist,
eine Kolbenstangenseitenkammer (S1) zum Unterbringen der Kolbenstange und eine Kolbenstangenseitenkammer (S2), die die Kolbenstange, die durch den Kolben in dem Dämpferzylinder festgelegt ist, nicht unterbringt,
eine Sammelbeckenkammer (S3), die durch ein Trennwandstück von der Kolbenstangenseitenkammer (S2), die die Kolbenstange nicht unterbringt, getrennt ist, und
Druckseitenventile zum Generieren der Dämpfungskraft zum Zeitpunkt der Kompression, für die jeweils in dem Kolben und in dem Trennwandstück gesorgt wird,
**dadurch gekennzeichnet, dass** eine Verbindungsbahn (P2, 131) zwischen der Sammelbeckenkammer und der Kolbenstangenseitenkammer gebildet ist, ein Blasventil (80, 130) in der Bahn bereitgestellt ist, das zu dem Zeitpunkt geöffnet werden soll, wenn der unterschiedliche Druck zwischen der Sammelbeckenkammer (S3) und der Kolbenstangenseitenkammer (S1) einen vorherbestimmen Wert erreicht, um es dem Öl zu erlauben, aus der Sammelbeckenkammer (S3) zur Kolbenstangenseitenkammer (S1) zu fließen, und eine Blasventilregulierungsvorrichtung (84, 134) zum Betrieb des Ventilöffnungsdrucks des Blasventils (80, 130) von außen bereitgestellt ist.

2. Der hydraulische Stoßdämpfer nach Anspruch 1, **dadurch gekennzeichnet, dass** eine erste Bypass-Bahn (41, 113), parallel zum Druckseitenventil (34, 111), in dem Kolben bereitgestellt ist, eine erste Druckseitendämpfkraftregulierungsvorrichtung (40, 114) zum Regulieren des Durchlassbereichs der ersten Bypass-Bahn bereitgestellt ist, eine zweite Bypass-Bahn (71, 123), parallel zu dem in dem Trennungswandstück bereitgestellten Druckseitenventil (60, 121), bereitgestellt ist und eine zweite Druckseitendämpfkraftregulierungsvorrichtung zum Regulieren des Durchlassbereichs der zweiten Bypass-Bahn bereitgestellt wird.

3. Der hydraulische Stoßdämpfer nach Anspruch 2, **dadurch gekennzeichnet, dass** ein Druckseitenunterventil (32) an dem Öffnungsteil zur Kolbenstangenseitenkammer der ersten Bypass-Bahn auf der Fallseite der ersten Druckseitendämpfkraftregulierungsvorrichtung bereitgestellt ist.

4. Der hydraulische Stoßdämpfer nach jedem der Ansprüche 1 bis 3, **dadurch gekennzeichnet, dass** ein Ventilblech in der Verbindungsbahn zwischen der Sammelbeckenkammer und der Kolbenstangenseitenkammer bereitgestellt wird, dabei das Blasventil in dem Ventilblech und eine zu dem Blasventil parallele Bypass-Bahn (92A, 135) bereitgestellt werden, und eine Dehnseitendämpfkraftregulierungsvorrichtung zum Regulieren des Durchlassbereichs der Bypass-Bahn bereitgestellt wird.

5. Der hydraulische Stoßdämpfer nach Anspruch 4, **dadurch gekennzeichnet, dass** er ein Dämpfergehäuse umfasst, das einen äußeren Zylinder und einen Untertank umfasst, der vollständig mit dem äußeren Zylinder bereitgestellt wird, und der Dämpferzylinder aufrecht in dem äußeren Zylinder des Dämpfergehäuses bereitgestellt wird,
eine Außenkammer, die in Verbindung mit der Kolbenstangenseitenkammer steht, zwischen dem äußeren Zylinder und dem Dämpferzylinder festgelegt ist, die Sammelbeckenkammer dabei in dem Untertank bereitgestellt ist,
eine erste Bahn zur Verbindung zwischen der Kolbenstangenkammer und der Sammelbeckenkammer in dem äußeren Zylinder und dem Untertank bereitgestellt ist, eine zweite Bahn zur Verbindung zwischen der Sammelbeckenkammer und der Außenkammer bereitgestellt ist,
die zweite Druckseitendämpfkraftregulierungsvorrichtung in der ersten in dem Untertank gebildeten Bahn bereitgestellt ist, und
die Blasventilregulierungsvorrichtung zum Betrieb des Ventilöffnungsdrucks des Blasventils von außen und die Dehnseitendämpfkraftregulierungsvorrichtung in der zweiten in dem Untertank geformten Bahn bereitgestellt werden.

6. Der hydraulische Stoßdämpfer nach Anspruch 2, **dadurch gekennzeichnet, dass** sowohl die erste Druckseitendämpfkraftregulierungsvorrichtung als auch die zweite Druckseitendämpfkraftregulierungsvorrichtung den Durchlassbereich der jeweiligen Bypass-Bahn von außen regulieren können.

## Revendications

1. Amortisseur hydraulique comprenant :
un piston placé dans la partie d'extrémité supérieure d'une tige de piston insérée de manière glissante dans un cylindre d'amortisseur,
une chambre côté tige de piston (S1) destinée à contenir la tige de piston et une chambre côté piston (S2) qui ne contient pas la tige de piston définie par le piston dans le cylindre d'amortisseur,
une chambre formant réservoir (S3) séparée de la chambre côté piston (S2) ne contenant pas la tige de piston par un élément formant cloison de séparation, et
des vannes côté pression pour produire la force d'amortissement au moment de la compression, placées chacune dans le piston et dans l'élément formant cloison de séparation,
**caractérisé en ce qu'**un chemin permettant la communication (P2, 131) entre la chambre formant réservoir et la chambre côté tige de piston est formé, une vanne de décharge (80, 130) est placée dans le chemin, destinée à s'ouvrir au moment où la pression différentielle entre la chambre formant réservoir (S3) et la chambre côté tige de piston (S1) atteint une valeur prédéterminée, pour permettre à de l'huile de s'écouler de la chambre formant réservoir (S3) à la chambre côté tige de piston (S1), et un dispositif de réglage de vanne de décharge (84, 134) pour régler la pression d'ouverture de vanne de la vanne de décharge (80, 130) de l'extérieur est prévu.

2. Amortisseur hydraulique selon la revendication 1, **caractérisé en ce qu'**un premier chemin de dérivation (41, 113) parallèle à la vanne côté pression (34, 111) est prévu dans le piston, un premier dispositif de réglage de force d'amortissement côté pression (40, 114) pour régler le diamètre d'ouverture du premier chemin de dérivation est prévu, un deuxième chemin de dérivation (71, 123) parallèle à la vanne côté pression (60, 121) formé dans l'élément formant cloison de séparation est prévu, et un deuxième dispositif de réglage de force d'amortissement côté pression pour régler le diamètre d'ouverture du deuxième chemin de dérivation est prévu.

3. Amortisseur hydraulique selon la revendication 2, **caractérisé en ce qu'**une sous-vanne côté pression (32) est placée dans la partie ouvrante de la chambre côté tige de piston du premier chemin de dérivation du côté aval du premier dispositif de réglage de force d'amortissement côté pression.

4. Amortisseur hydraulique selon l'une quelconque des revendications 1 à 3, **caractérisé en ce qu'**une feuille de vanne est placée dans le chemin de communication entre la chambre formant réservoir et la chambre côté tige de piston, la vanne de décharge étant placée dans la feuille de vanne et un chemin de dérivation (92A, 135) parallèle à la vanne de décharge, et un dispositif de réglage de force d'amortissement côté allongement pour régler le diamètre d'ouverture du chemin de dérivation est prévu.

5. Amortisseur hydraulique selon la revendication 4, **caractérisé en ce qu'**il comprend un boîtier amortisseur comprenant un cylindre extérieur et un sous-réservoir formé d'un seul tenant avec le cylindre extérieur, le cylindre d'amortisseur étant placé debout dans le cylindre extérieur du boîtier amortisseur,
une chambre extérieure communiquant avec la chambre côté tige de piston est définie entre le cylindre extérieur et le cylindre d'amortisseur, la chambre formant réservoir étant placée dans le sous-réservoir,
un premier chemin permettant la communication entre la chambre côté piston et la chambre formant réservoir est prévu dans le cylindre extérieur et le sous-réservoir, un deuxième chemin permettant la communication entre la chambre formant réservoir et la chambre extérieure est prévu,
le deuxième dispositif de réglage de force d'amortissement côté pression est placé dans le premier chemin formé dans le sous-réservoir, et
le dispositif de réglage de vanne de décharge pour régler la pression d'ouverture de vanne de la vanne de décharge de l'extérieur et le dispositif de réglage de force d'amortissement côté allongement sont placés dans le deuxième chemin formé dans le sous-réservoir.

6. Amortisseur hydraulique selon la revendication 2, **caractérisé en ce que** le premier dispositif de réglage de force d'amortissement côté pression et le deuxième dispositif de réglage de force d'amortissement côté pression peuvent tous deux régler le diamètre d'ouverture du chemin de dérivation respectif de l'extérieur.
